# NOUVEAU FASCICULE DE BREVET EUROPEEN

(11) **EP 2 530 121 B2**
(45) Date de publication et mention de la décision concernant l'opposition: **21.12.2022**
(45) Mention de la délivrance du brevet: 05.04.2017
(21) Numéro de dépôt: 12170256.7
(22) Date de dépôt: 31.05.2012
(51) Int. Cl.: C08L 77/00, C08L 77/02, C08J 3/12, B29C 67/00, C08K 3/32, C08K 3/38, C08K 5/55, C08K 3/24, C08G 69/04, C08J 11/04, C08G 69/02

(54) **PROCEDE POUR AUGMENTER LA RECYCLABILITE D'UN POLYAMIDE UTILISE EN FRITTAGE**
Verfahren zum Erhöhen der Recyclingfähigkeit eines Polyamids, das zum Sintern benutzt wird
Method for increasing the recyclability of a polyamide used in sintering

(30) Priorité: 31.05.2011 FR 1154744
(43) Date de publication de la demande: 05.12.2012
(73) Titulaire: ARKEMA FRANCE, 92700 Colombes (FR)
(72) Inventeur: Lemaitre, Arnaud, 27450 SAINT MARTIN - SAINT FIRMIN (FR); Mathieu, Cyrille, 76000 ROUEN (FR)
(74) Mandataire: Bandpay & Greuter

(56) Documents cités:
- EP-A1- 1 413 595
- FR-A1- 2 873 380
- FR-A1- 2 952 062
- JP-A- 10 081 820
- US-A- 4 334 056
- US-A1- 2004 102 537
- US-A1- 2004 102 539
- Alscher, Dissertation 2000
- Nöken, 1997

## Description

La présente invention se rapporte à la fabrication de poudres de polyamide pouvant être recyclées plusieurs fois dans les procédés de fabrication couche-par-couche d'objets par agglomération de poudre par fusion ou frittage provoqué par un rayonnement.

Ledit rayonnement peut être un faisceau laser (dans le cas du laser sintering), un rayonnement infra rouge ou un rayonnement UV ou toute source de rayonnement électromagnétique. De tels procédés sont décrits notamment dans les documents US6136948 et WO9606881. Le terme « frittage » dans la présente description inclut tous ces procédés, quel que soit le type de rayonnement. Même si, dans le texte qui suit, on fait référence le plus souvent au procédé laser sintering, ce qui est écrit pour le laser sintering est bien entendu valable pour les autres procédés de frittage.

Les poudres de polyamide utilisées en frittage ont typiquement un diamètre médian en volume D50 compris dans la gamme de 5 à 200 µm.

Dans les procédés de frittage, il est recommandé d'utiliser un polyamide dont l'écart entre la température de fusion de première chauffe Tf1 et la température de cristallisation Tc est le plus grand possible pour éviter les phénomènes de déformation, et dont l'enthalpie de fusion ΔHf est la plus élevée possible pour obtenir une bonne définition géométrique des pièces fabriquées. Cela permet d'accroître la fenêtre de travail avec la poudre polyamide et de rendre sa mise en oeuvre dans un procédé de frittage beaucoup plus aisée. Des procédés d'obtention de telles poudres sont notamment décrits dans les documents FR2867190, FR2873380, et FR2930555. De préférence, l'écart Tf1-Tc des poudres PA utilisées en frittage est compris dans la gamme de 30°C à 50°C.

Pour les procédés de frittage, tels que laser sintering, on privilégie également l'utilisation de poudre de polyamide avec les propriétés suivantes :
La masse moléculaire de la poudre à l'état solide est de préférence suffisamment faible, c'est-à-dire de viscosité inhérente en solution inférieure à 2, à la fois pour que la fusion des grains ne nécessite pas trop d'énergie et pour que la coalescence inter-grains soit suffisante lors du passage du rayonnement de façon à obtenir un objet le moins poreux possible, avec de bonnes propriétés mécaniques.

La poudre lorsqu'elle est fondue doit pouvoir remonter en viscosité, pour atteindre une masse moléculaire suffisante, et garantir une viscosité en solution de la pièce supérieure à 1,5, de sorte que la pièce (objet 3D) présente des propriétés mécaniques acceptables. Par propriétés mécaniques acceptables, on entend typiquement un module supérieur à 1300 Mpa et un allongement à la rupture supérieur à 15% pour des objets construits en X/Y, c'est-à-dire fabriqués majoritairement dans les deux dimensions horizontales ou « à plat » dans le dispositif de frittage.

Au cours de chaque construction, aussi appelée un « run », une grande partie de la poudre n'est pas utilisée : environ 85% de la poudre n'est pas visée par le laser. Il est donc avantageux de pouvoir réutiliser, c'est-à-dire recycler cette poudre lors de la construction suivante (ou « run » suivant). La poudre de polyamide doit autant que possible avoir conservé ses propriétés initiales : couleur, viscosité, propriétés mécaniques.

On s'aperçoit que certaines poudres de polyamide nécessitent de modifier les paramètres du dispositif de frittage, en particulier d'augmenter de manière drastique la puissance du rayonnement, à chaque recyclage de la poudre lors de runs successifs. En outre, on constate un déclin très net des propriétés mécaniques des pièces obtenues au fur et à mesure des runs: le module en traction est de plus en plus faible, passant sous le seuil de 1300 MPa dès le second run, et l'allongement à la rupture passe inférieur à 15% dès le quatrième run.

Lors d'une construction par frittage, la poudre environnante, c'est-à-dire non touchée par le rayonnement, reste plusieurs heures au-dessus de sa température de cristallisation Tc ce qui peut entraîner une augmentation de la masse moléculaire et donc de la viscosité du polyamide (phénomène appelé « remontée en viscosité »). Par suite, la coalescence entre grains de poudre devient de plus en plus difficile au cours des runs successifs. Ces problèmes sont notamment évoqués aux paragraphes [0012] et [0013] du document de brevet US20060071359.

Plusieurs solutions ont déjà été proposées pour tenter de contrôler ou limiter ces évolutions de masse moléculaire de la poudre à l'état solide.

Le document US2004010239 propose l'ajout de limiteurs de chaine, par apport de groupements carboxyliques en excès durant la polymérisation de polyamide 12.

Le document US2004106691 propose l'utilisation de savons métalliques (0,5%) additionnée à la poudre polyamide. Toutefois, lorsqu'ils sont au contact de certains solvants, les objets fabriqués à partir de ces poudres ont tendance à re-larguer des dérivés de sels métalliques ce qui restreint leur utilisation à certaines applications.

Le document US20060071359 évoque au paragraphe [0015] les inconvénients des solutions décrites dans les deux documents précités. Les pièces obtenues par LS présentent un allongement à la rupture insuffisant (inférieur à 10 %). Ceci serait dû au fait que la remontée en viscosité (en masse) du polyamide constitutif des pièces est insuffisante pour permettre des propriétés mécaniques acceptables. Pour résoudre ce problème, le document US20060071359 propose un mélange de polyamides à extrémités de chaîne diacide et de polyamides à extrémités de chaîne diamine. Sur le papier, ce procédé peut paraître proche de l'idéal: A l'état solide, c'est à dire pour la poudre qui ne voit pas le laser, il n'y a pas de réaction entre le polyamide à extrémités diacide et le polyamide à extrémités diamine, donc pas de remontée en masse moléculaire de la poudre initiale. En théorie la poudre serait donc recyclable à 100%. A l'état fondu (c'est à dire pour la poudre qui constitue la pièce en construction), le mélange PA diacide et PA diamine réagit et remonte en masse moléculaire, assurant l'obtention de propriétés mécaniques correctes.

Le document US20090291308 indique plusieurs inconvénients de ces mélanges de polyamide à fins de chaîne contrôlées diacide et de polyamide à fins de chaîne contrôlées diamine, en particulier au paragraphe [0006] de ce document : L'utilisateur est en effet obligé d'utiliser cette poudre spécifique aux propriétés différentes de la poudre habituellement utilisée dans les procédés de frittage, et cette poudre ne remplit pas les exigences en terme de conditions du procédé et de produits obtenus par laser sintering.

Une autre solution pour améliorer la recyclabilité de la poudre polyamide est décrite dans le document US7229272 qui concerne une méthode de traitement par liquéfaction de la poudre usagée, dans laquelle on fait passer la poudre dans un fluide. Mais ce procédé n'est pas suffisamment performant de sorte qu'à forte teneur en poudre recyclée (supérieure à 80% en poids), on observe des défauts de surface, tels que l'effet « peau d'orange » c'est-à-dire une surface rugueuse sur l'objet obtenu par frittage, ce que confirme le document US20090291308 au paragraphe [0005].

Le procédé revendiqué dans le document US20090291308 consiste à traiter la poudre utilisée au run précédent avant de recycler ladite poudre traitée lors d'un run ultérieur. Le traitement consiste à placer un polyamide dans de l'eau ou de la vapeur d'eau à haute température (130 à 150°C) pour l'hydrolyser et donc diminuer sa masse moléculaire. On contrôle la masse moléculaire finale en jouant sur la durée et la température de traitement. Ce procédé nécessite, entre 2 runs successifs, et à proximité du dispositif de frittage, de traiter la poudre à la vapeur d'eau et de la sécher (voir en particulier les revendications 32 à 36). Ce procédé qui nécessite de nombreuses étapes intermédiaires entre les runs n'est pas viable économiquement.

La présente invention a donc pour but de fournir des poudres faciles à mettre en oeuvre et recyclables plusieurs fois, c'est-à-dire au moins 4 fois, dans les procédés de frittage, et qui génèrent des objets aux propriétés mécaniques acceptables.

La Demanderesse a maintenant trouvé que l'utilisation d'au moins 4000 ppm de certains acides dans du polyamide permettait d'améliorer la recyclabilité des poudres de polyamide dans les procédés de frittage. La demanderesse s'est rendue compte que, de manière surprenante, l'utilisation selon l'invention, permettait à la fois :
- de freiner l'évolution de masse moléculaire de la poudre à l'état solide lorsqu'elle n'est pas utilisée au cours d'un run pour pouvoir la recycler et,
- de ne pas bloquer l'évolution des masses moléculaires de la poudre fondue constitutive de l'objet, de sorte que les propriétés mécaniques de l'objet obtenu sont acceptables et reproductibles au cours des runs.

La présente invention a donc pour objet l'utilisation selon la revendication 1.

Les autres acides, en particulier les acides autres que ceux à base de phosphore, n'ont pas permis d'aboutir à du polyamide aux propriétés physico-chimiques satisfaisantes.

Le polyamide utilisable dans l'invention peut être un homopolyamide ou un copolyamide. Il peut être un mélange de polyamide et d'au moins un autre polymère, le polyamide formant la matrice et le ou les autres polymères formant la phase dispersée.

Avantageusement le polyamide est sous forme divisée telle que de la poudre ou des granules. Les granules ainsi traités peuvent être ensuite broyés pour faire des poudres. On entend par « polyamide » au sens de l'invention les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame;
- d'un ou plusieurs sels ou mélanges de diamines telles l'hexaméthylènediamine, la décanediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaique, subérique, sébacique et dodécanedicarboxylique. A titre d'exemple de polyamide on peut citer le PA 6, le PA 6.6, le PA 10.10, le PA11 et le PA 12.

On peut aussi utiliser des copolyamides. On peut citer les copolyamides résultant de la condensation d'au moins deux monomères différents, par exemple d'au moins deux acides alpha oméga aminocarboxyliques différents ou de deux lactames différents ou d'un lactame et d'un acide alpha oméga aminocarboxylique de nombre de carbone différents. On peut encore citer les copolyamides résultant de la condensation d'au moins un acide alpha oméga aminocarboxylique (ou un lactame), au moins une diamine et au moins un acide dicarboxylique. On peut encore citer les copolyamides résultant de la condensation d'une diamine aliphatique avec un diacide carboxylique aliphatique et au moins un autre monomère choisi parmi les diamines aliphatiques différentes de la précédente et les diacides aliphatiques différents du précédent.

Le terme « monomère » dans la description suivante doit être pris au sens d' « unité répétitive ». Le cas où une unité répétitive est constituée de l'association d'un diacide avec une diamine est particulier. On considère que c'est l'association d'une diamine et d'un diacide, c'est-à-dire le couple diamine.diacide (en quantité équimolaire), qui correspond au monomère. Ceci s'explique par le fait qu'individuellement, le diacide ou la diamine n'est qu'une unité structurale, qui ne suffit pas à elle seule à former un polymère.

A titre d'exemple de lactames on peut citer ceux ayant de 3 à 12 atomes de carbone sur le cycle principal et pouvant être substitués. On peut citer par exemple le beta,beta-diméthylpropriolactame, le alpha,alpha-diméthylpropriolactame, l'amylolactame, le caprolactame, le capryllactame et le lauryllactame.

A titre d'exemple d'acide alpha oméga aminocarboxylique on peut citer l'acide aminoundécanoique et l'acide aminododécanoique. A titre d'exemple d'acide dicarboxylique on peut citer l'acide adipique, l'acide sébacique, l'acide isophtalique, l'acide butanedioique, l'acide 1,4 cyclohexyldicarboxylique, l'acide téréphtalique, le sel de sodium ou de lithium de l'acide sulphoisophtalique, les acides gras dimérises (ces acides gras dimérisés ont une teneur en dimére d'au moins 98% et sont de préférence hydrogénés) et l'acide dodécanedioïque HOOC-(CH2)10-COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tétraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohexyl) méthane (BACM), la bis(3-méthyl-4 aminocyclohexyl) méthane (BMACM).

A titre d'exemples de copolyamides, on peut citer des copolymères de caprolactame et de lauryllactame (PA 6/12), des copolymères de caprolactame, d'acide adipique et d'hexaméthylène diamine (PA 6/6.6), des copolymères de caprolactame, de lauryl lactame, d'acide adipique et d'hexaméthylène diamine (PA 6/12/6.6), des copolymères de caprolactame, de lauryllactame, d'acide amino 11 undécanoique, d'acide azelaïque et d'hexaméthylène diamine (PA 6/6.9/11/12), des copolymères de caprolactame, de lauryllactame, d'acide amino 11 undécanoïque, d'acide adipique et d'hexaméthylène diamine (PA 6/6.6/11/12), des copolymères de lauryllactame, d'acide azélaïque et d'hexaméthylène diamine (PA 6.9/12), des copolymères d'acide amino 11 undécanoïque, d'acide téréphtalique et de décaméthylène diamine (PA 11/10.T).

On peut utiliser des mélanges de polyamides. Ce sont par exemple des mélanges de polyamides aliphatiques et de polyamides semi-aromatiques et des mélanges de polyamides aliphatiques et de polyamides cycloaliphatiques.

A titre d'exemple, on peut citer les compositions transparentes décrites dans la demande de brevet EP1227131 comprenant en poids, le total étant 100% :
- 5 à 40% d'un polyamide amorphe (B) qui résulte essentiellement de la condensation :
   - soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
   - soit d'un acide alpha omega amino carboxylique cycloaliphatique,
   - soit d'une combinaison de ces deux possibilités,
   - et éventuellement d'au moins un monomère choisi parmi les acides alpha oméga amino carboxyliques ou les éventuels lactames correspondants, les diacides aliphatiques et les diamines aliphatiques,
- 0 à 40% d'un polyamide souple (C) choisi parmi les copolymeres a blocs polyamides et blocs polyether et les copolyamides,
- 0 à 20% d'un compatibilisant (D) de (A) et (B),
- 0 à 40% d'un modifiant souple (M),
- avec la condition que (C)+(D)+(M) est compris entre 0 et 50 %,
- le complément à 100% d'un polyamide (A) semi cristallin.

On peut encore citer les compositions transparentes décrites dans la demande de brevet EP 1227132 comprenant en poids, le total étant 100% :
- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi: les acides alpha oméga amino carboxyliques, les diacides aliphatiques, les diamines aliphatiques,
- 0 à 40% d' un polyamide souple (C) choisi parmi les copolymeres a blocs polyamides et blocs polyéther et les copolyamides,
- 0 à 20% d'un compatibilisant (D) de (A) et (B),
- (C)+(D) est compris entre 2 et 50%,
- avec la condition que (B)+(C)+(D) n'est pas inferieur à 30%,
- le complément à 100% d'un polyamide (A) semi cristallin.

On ne sortirait pas du cadre de l'invention en remplaçant une partie du polyamide par un copolymère à blocs polyamide et blocs polyéther, c'est à dire en utilisant un mélange comprenant au moins un des polyamides précédents et au moins un copolymère à blocs polyamide et blocs polyéther.

Les copolymères à blocs polyamides et blocs polyéthers résultent de la copolycondensation de séquences polyamides à extrémités réactives avec des séquences polyéthers à extrémités réactives, telles que, entre autres:
1) Séquences polyamides à bouts de chaînes diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-omega dihydroxylées aliphatiques appelées polyétherdiols.
3) Séquences polyamides à bouts de chaines dicarboxyliques avec des polyétherdiols, les produits obtenus étant, dans ce cas particulier, des polyétheresteramides. On utilise avantageusement ces copolymères.

Les séquences polyamides à bouts de chaines dicarboxyliques proviennent, par exemple, de la condensation d'acides alpha-omega aminocarboxyliques, de lactames ou de diacides carboxyliques et diamines en présence d'un diacide carboxylique limiteur de chaine.

Le polyéther peut être par exemple un polytétraméthylene glycol (PTMG). Ce dernier est aussi appelé polytétrahydrofurane (PTHF).

La masse molaire en nombre des séquences polyamides est comprise entre 300 et 15000 et de préférence entre 600 et 5 000 g/mol. La masse molaire des séquences polyéther est comprise entre 100 et 6 000 et de préférence entre 200 et 3 000 g/mol.

Les polymères à blocs polyamides et blocs polyéthers peuvent aussi comprendre des motifs repartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-omega amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont repartis de façon statistique le long de la chaîne polymère.

Les blocs polyétherdiols sont soit utilises tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Le rapport de la quantité de copolymère à blocs polyamide et blocs polyéther sur la quantité de polyamide est avantageusement compris entre 1/99 et 15/85 en poids.

S'agissant du mélange de polyamide et d'au moins un autre polymère, il se présente sous forme d'un mélange à matrice polyamide et le (ou les) autre(s) polymère(s) forme(nt) la phase dispersée. A titre d'exemple de cet autre polymère on peut citer les polyoléfines, les polyesters, le polycarbonate, le PPO (abréviation de polyphénylène oxide), le PPS (abréviation de polyphénylène sulfide), les élastomères.

Le polyamide, qu'il soit ou non en mélange avec au moins un autre polymère peut contenir des charges, des pigments, des antioxydants et des anti UV.

L'invention est particulièrement utile pour les polyamides choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 percent de motifs 11 soit plus de 90 percent de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer le PA 6.12 résultant de la condensation de l'hexaméthylène diamine et de l'acide 1,12-dodécanedioique ; le PA 9.12 résultant de la condensation de la diamine en C9 et de l'acide 1,12-dodécanedioique ; le PA 10.10 résultant de la condensation de la diamine en C10 et de l'acide 1,10-décanedioïque ; le PA 10.12 résultant de la condensation de la diamine en C10 et de l'acide 1,12-dodécanedioïque.

Quant aux copolyamides 11/12 ayant soit plus de 90 % de motifs 11 soit plus de 90% de motifs 12, ils résultent de la condensation de l'acide amino-11-undécanoique avec le lauryllactame (ou l'alpha omega amino acide en C12).

On ne sortirait pas du cadre de l'invention en utilisant un mélange de polyamides.

L'acide utilisable dans l'invention est choisi parmi l'acide hypophosphoreux H₃PO₂, l'acide phosphoreux H₃PO₃, l'acide phosphorique H₃PO₄, l'acide pyrophosphorique (aussi appelé diphosphorique) H₄P₂O₇, les phosphates de métal, les phosphites de métal, les hypophosphites de métal, les esters et les anhydrides phosphoriques et phosphoreux, et leurs mélanges. Ces acides sont par ailleurs couramment utilisés comme catalyseurs de réaction de polycondensation de certains polyamides, mais toujours selon des teneurs inférieures à 3000 ppm.

De préférence, ledit au moins un acide comprend un mélange d'acide hypophosphoreux H₃PO₂ et d'acide phosphorique H₃PO₄, selon un ratio en poids compris dans la gamme de 10/90 à 90/10.

Avantageusement, la composition selon l'invention est sous forme de poudre de diamètre médian en volume (D50) compris dans la gamme de 5 à 200 µm.

Selon l'invention, l'acide tel que défini ci-dessus est incorporé par au moins une des méthodes suivantes : imprégnation du polyamide dans une dispersion aqueuse de l'acide, ajout d'acide lors de la synthèse de polyamide, en fin de synthèse, ou lors d'une quelconque étape d'un procédé de fabrication de poudre à partir dudit polyamide, notamment par dissolution-précipitation de polyamide dans un solvant contenant l'acide, par exemple dispersé ou dissous dans le solvant.

Selon un mode de réalisation préféré de l'invention, l'acide est ajouté par imprégnation du polyamide dans une dispersion aqueuse de l'acide. On augmente ainsi la température de fusion Tf et l'enthalpie de fusion de la poudre en même temps que l'on augmente sa recyclabilité si l'on ajoute la quantité et la nature d'acide selon l'invention, lors d'une étape de traitement à l'eau telle que décrite dans le brevet EP1413595. Avantageusement, l'acide est ajouté lors d'un traitement à l'eau du polyamide dans lequel on met en contact le polyamide à l'état solide avec de l'eau ou de la vapeur d'eau contenant l'acide à une température proche de sa température de cristallisation Tc pendant une durée suffisante pour effectuer cette augmentation, puis on sépare l'eau (ou la vapeur d'eau) du polyamide et on sèche le polyamide.

Avantageusement, l'utilisation selon l'invention implique les étapes suivantes :
A - Mélanger le polyamide avec une solution d'eau ou de vapeur d'eau comprenant de 0,1 à 5% d'acide, le ratio en poids poudre/solution étant compris dans la gamme allant de 5 à 75%, de préférence de 15 à 50% ;
B - Soumettre le mélange à un palier de température comprise dans la gamme de Tc-20°C à Tc+10°C, cette étape ayant de préférence une durée de 2 à 100 heures, de préférence de 2 à 30 heures ;
C - Optionnellement, refroidir le mélange à température ambiante, c'est-à-dire jusqu'à une température comprise dans la gamme de 10 à 50°C ;
D - Séparer l'eau ou la vapeur d'eau du polyamide pour récupérer le polyamide sec. De préférence, la solution d'eau a une température comprise dans la gamme de 40 et 90°C lors de l'étape A, ce chauffage permettant d'accélérer la dispersion et l'imprégnation du polyamide par la solution d'acide.

Le polyamide de départ utilisé dans l'invention peut être sous forme de granulés ou de poudre. Il est de préférence sous forme de poudre de D50 compris dans la gamme de 10 à 150 µm, de préférence de 30 à 80 µm Lorsque des granulés de polyamide sont mis en oeuvre dans l'invention, ils pourront à l'issue du procédé, être broyés de façon à obtenir une poudre de D50 compris dans la gamme de 10 à 150 µm.

Avantageusement, un polyamide obtenu selon l'invention, est caractérisé en ce qu'il contient de 4000 à 10000 ppm d'acide tel que défini précédemment. Ce polyamide est sous forme divisée, sous forme de granulés ou de poudre, de préférence sous forme de poudre de D50 compris dans la gamme de 10 à 150 µm.

Avantageusement, un procédé de fabrication d'objets par agglomération de poudres de polyamide par fusion utilisant un rayonnement ou procédé de frittage, peut utiliser les poudres de composition conforme à celle du PA défini précédemment résultant d'un procédé conforme à celui décrit plus haut. N'importe quel dispositif de frittage connu dans ce domaine peut être utilisé, tel que les dispositifs commercialisés par EOS, 3D System, Aspect, Trump Précision Machinery. On peut notamment citer les appareils EOSINT P360 ou encore Formiga P100 d'EOS GmbH.

Un article 3D manufacturé, ainsi obtenu par fusion à l'aide d'un rayonnement électromagnétique d'une poudre telle que décrite ci-dessus, peut être choisi parmi les prototypes et les modèles, notamment dans les domaines automobile, nautique, aéronautique, aérospatial, médical (prothèses, systèmes auditifs, tissus cellulaires...), le textile, l'habillement, la mode, la décoration, le design, des boîtiers pour l'électronique, la téléphonie, la domotique, l'informatique, l'éclairage.

Les pièces fabriquées par frittage de poudre telle que décrite ci-dessus qui ont une viscosité inhérente en solution supérieure à 1,5 présentent avantageusement un module supérieur à 1300 MPa et un allongement à la rupture supérieur à 15%, même après plusieurs recyclages (au moins 4 recyclages) de la poudre.

Dans la présente description de l'invention, y-compris dans les exemples ci-après :
- le D50 aussi appelé ici « diamètre médian en volume » correspond à la valeur de la taille de particule qui divise la population de particules examinée exactement en deux. Le D50 est mesuré selon la norme ISO 9276 - parties 1 à 6 : « Représentation de données obtenues par analyse granulométrique ». Dans la présente description, on utilise un granulomètre laser (Sympatec Helos) et un logiciel (Fraunhofer) pour obtenir la distribution granulométrique de la poudre et en déduire le D50.
- la viscosité inhérente en solution (notamment du polyamide, des poudres ou des pièces fabriquées par frittage) est mesurée à une concentration de 0,5% en poids en solution dans du métacrésol sur le poids total de la solution, à 20°C, au moyen d'un viscosimètre Ubbelohde ;
- Les propriétés mécaniques, notamment le module en traction et l'allongement à la rupture, sont mesurées selon la norme selon la norme ISO 527-2 : 93-1BA.
- l'analyse des caractéristiques thermiques du polyamide est faite par DSC selon la norme ISO 11357-3 "Plastics - Differential Scanning Calorimetry (DSC) Part 3: Determination of temperature and enthalpy of melting and crystallization". Les températures qui intéressent ici plus particulièrement l'invention sont la température de fusion lors de la première chauffe (Tf1), la température de cristallisation (Tc) et l'enthalpie de fusion.

### Exemples:

### Construction en machine Laser Sintering (Formiga P100)

Poudre PA 11 de référence : Il s'agit d'une poudre de polyamide 11 de D50 ± 50 µm, traitée à l'eau selon le procédé décrit dans le document EP1413595, ladite poudre comprenant moins de 4000 ppm d'acide.
Poudre PA 11 selon l'invention : Il s'agit d'une poudre de polyamide 11 de D50 = 50 µm, traitée selon l'invention, ici traitée à l'eau dans les mêmes conditions que pour la poudre de référence, excepté le fait que l'eau de traitement contient en plus de l'acide conforme à l'invention. La poudre de PA11 obtenue comprend dans ce cas plus de 4000 ppm d'acide, et elle est conforme à l'invention, l'acide étant du H₃PO₄ commercialisé par Febex.

Sur 4 constructions successives (runs 1 à 4) utilisant la poudre engagée (run 0) recyclée successivement à 100% lors de chaque run 1 à 4, on a mesuré :
- les paramètres de construction (puissance laser nécessaire pour fondre la poudre) :
   ∘ puissance laser Externe (correspond au contour de la pièce)
   ∘ puissance laser Interne (correspond à l'intérieur de la pièce)
- les viscosités respectives de la poudre et des pièces
- les propriétés mécaniques des pièces construites en X/Y :
   ∘ module
   ∘ allongement rupture

### A) Paramètres de construction :

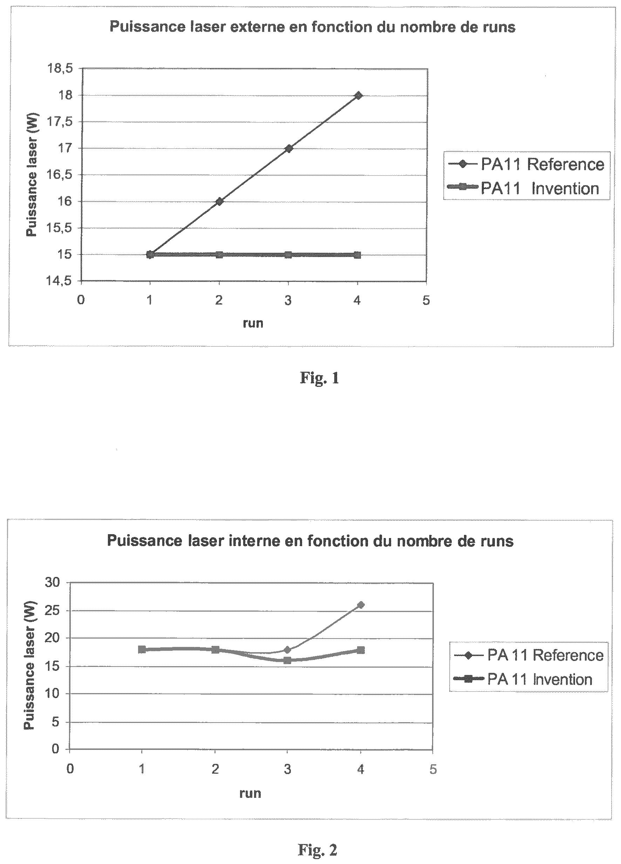

Il s'avère nécessaire de modifier les paramètres de construction dans le cas de la poudre de référence au fur et à mesure des runs : augmentation de la puissance laser (tableau 1), ce qui n'est pas nécessaire dans le cas de la poudre selon l'invention (tableau 2). Cette différence apparaît clairement sur les graphes respectifs des figures 1 et 2 et sur le tableau 3.

**Tableau 1 - PA11 de référence (comparatif)**

| **Conditions machine** | | **Run 1** | **Run 2** | **Run 3** | **Run 4** |
|---|---|---|---|---|---|
| **Température de la chambre d'exposition** | | 176-177°C | 176°C | 176°C | 178°C |
| **Température de la chambre de retrait** | | 158°C | 160°C | 160°C | 160°C |

| **Conditions machine** | | **Run 1** | **Run 2** | **Run 3** | **Run 4** |
|---|---|---|---|---|---|
| **Contour** | **Puissance laser** | 15 W | 16 W | 17 W | 18 W |
| | **Vitesse** | 1500 mm/s | 1500 mm/s | 1500 mm/s | 1500 mm/s |
| **Hachurage** | **Puissance laser** | 18W | 18W | 18W | 26-27W |
| | **Vitesse** | 3000 mm/s | 3000 mm/s | 3000 mm/s | 3000 mm/s |
| | **Déplacement du rayon** | 0.2 mm | 0.2 mm | 0.2 mm | 0.2 mm |

**Tableau 2 - PA11 selon l'invention**

| **Conditions machine** | | **Essai 1** | **Essai 2** | **Essai 3** | **Essai 4** | **Essai 5** | **Essai 6** |
|---|---|---|---|---|---|---|---|
| **Température de la chambre d'exposition** | | 175°C | 176°C | 176°C | 177°C | 178°C | 176°C |
| **Température de la chambre de retrait** | | 170°C | 170°C | 170°C | 150°C | 156°C | 158°C |
| **Contour (avant et après hachurage)** | **Puissance laser** | 15 W | 15 W | 15 W | 15 W | 15 W | 15 W |
| | **Vitesse** | 1500 mm/s | | | | | |
| **Hachurage** | **Puissance laser** | 18 W | 18 W | 16 W | 16 W | 18 W | 18 W |
| | **Vitesse** | 3000 mm/s | 3000 mm/s | 3000 mm/s | 3000 mm/s | 3000 mm/s | 3000 mm/s |
| | **Déplacement du rayon** | 0.2 mm | 0.2 mm | 0.2 mm | 0.2 mm | 0.2 mm | 0.2 mm |

**Tableau 3 - Comparaison de l'évolution de la puissance Laser**

| | **Puissance Laser (externe) (W)** | | **Puissance Laser (interne) (W)** | |
|---|---|---|---|---|
| | **PA 11 Reference** | **PA 11 Invention** | **PA 11 Reference** | **PA 11 Invention** |
| run 1 | 15 | 15 | 18 | 18 |
| run 2 | 16 | 15 | 18 | 18 |
| run 3 | 17 | 15 | 18 | 16 |
| run 4 | 18 | 15 | 26 | 18 |

### B) Evolution de la viscosité des poudres et des pièces :

Au fur et à mesure des runs, la viscosité de la poudre à l'état solide (poudre « environnante ») selon l'invention reste stable et plus faible que celle de la poudre de référence. De plus, elle demeure toujours inférieure à 2 contrairement à celle de référence.

**Tableau 4**

| | Viscosité de la **poudre** | | Viscosité de la **pièce** | |
|---|---|---|---|---|
| | PA 11 reference | PA 11 Invention | PA 11 reference | PA 11 Invention |
| run 0 | 1,27 | 1,21 | 1,27 | 1,21 |
| run 1 | 2,36 | 1,85 | 2,05 | 1,84 |
| run 2 | 2,47 | 1,81 | 2,3 | 1,91 |
| run 3 | 2,3 | 1,94 | 2,39 | 1,99 |
| run 4 | 2,18 | 1,88 | 2,33 | 2,01 |
| run 5 | | 1,89 | | 2,06 |

La viscosité des pièces obtenues avec la poudre selon l'invention est supérieure à 1,5 dès la première construction (run 1) assurant ainsi des propriétés mécaniques acceptables (cf point C).

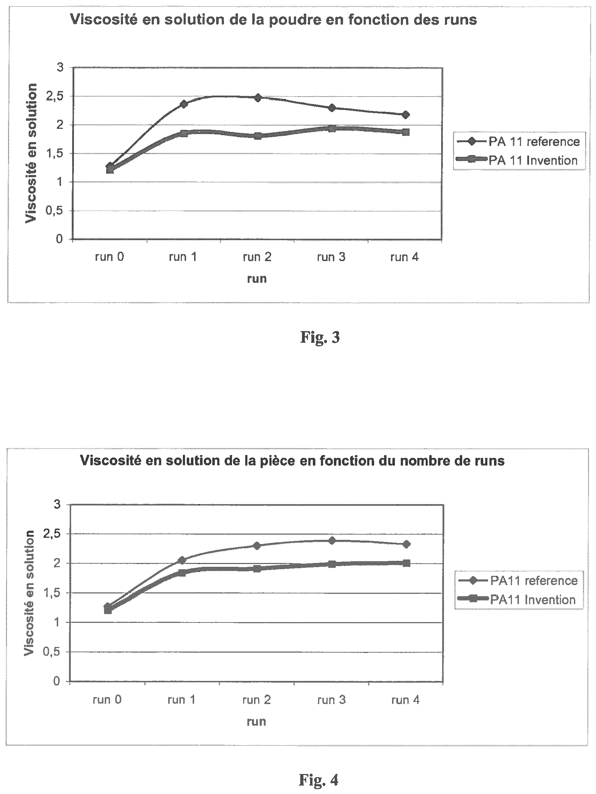

Ces évolutions rassemblées dans le tableau 4 sont également représentées sur les graphes des figures 3 et 4.

### C) Evolution des propriétés mécaniques :

Le tableau 5 indique l'évolution du module en traction et l'évolution de l'allongement à la rupture respectivement pour la pièce obtenue à partir de poudre PA11 de référence et pour celle selon l'invention.

**Tableau 5**

| | Module en traction (MPa) | | Allongement à la rupture (%) | |
|---|---|---|---|---|
| | PA Reference | PA 11 Invention | PA Reference | PA 11 Invention |
| run 1 | 1750 | 1905 | 29,6 | 25 |
| run 2 | 1240 | 1665 | 28 | 24 |
| run 3 | 700 | 1523 | 23 | 25 |
| run 4 | 300 | 1342 | 12 | 24 |

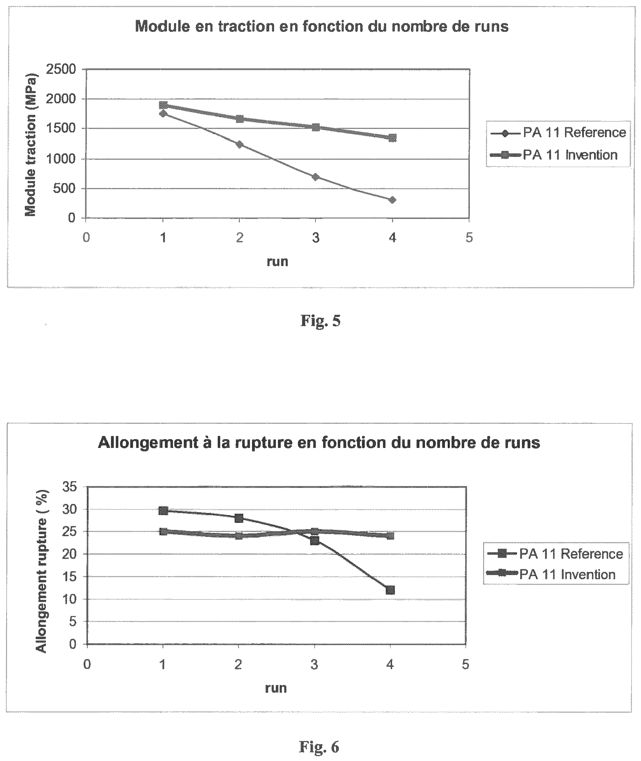

Ces évolutions sont également représentées sur les graphes des figures 5 et 6 : Evolution du module en traction : même après 4 runs, le module de la pièce fabriquée à partir de poudre PA 11 selon l'invention reste supérieur à 1300 Mpa. Concernant la pièce issue de la poudre PA 11 de référence, son module est inférieur à 1300 Mpa dès le second run, donc ses propriétés mécaniques ne sont pas acceptables.
Evolution de l'allongement à la rupture : l'allongement à la rupture reste stable pour la pièce fabriquée à partir de poudre PA 11 selon l'invention, toujours supérieur à 20 %. On observe en revanche une importante diminution de l'allongement à la rupture, passant inférieur à 15 % dès le 4^{ème} run pour la pièce issue de poudre PA 11 de référence, conduisant à des pièces dont les propriétés mécaniques ne sont pas acceptables.

En définitive, l'invention, par le contrôle de la nature et de la quantité d'acides au sein de la poudre polyamide que l'on engage lors de la première construction par frittage, permet d'augmenter la recyclabilité de la poudre (recyclable au moins 4 fois dans les exemples ci-dessus) en obtenant à chaque fois par frittage des objets reproductibles aux propriétés mécaniques acceptables, comme le montrent les exemples ci-dessus. L'utilisation selon l'invention revient à fournir une poudre, dans laquelle l'évolution de masse moléculaire subie par la poudre fondue et par la poudre non fondue pendant chaque construction a été maîtrisée à l'avance de manière simple dans la poudre que l'on engage lors de la première construction.

## Revendications

1. Utilisation d'au moins 4000 ppm d'au moins un acide pour augmenter la recyclabilité d'un polyamide dans un procédé de frittage, ledit acide étant choisi parmi l'acide hypophosphoreux H₃PO₂, l'acide phosphoreux H₃PO₃, l'acide phosphorique H₃PO₄, l'acide pyrophosphorique H₄P₂O₇, les phosphates de métal, les phosphites de métal, les hypophosphites de métal, les esters et les anhydrides phosphoriques et phosphoreux, et leurs mélanges ; dans laquelle l'acide est incorporé dans le polyamide par au moins une des méthodes suivantes : imprégnation du polyamide dans une dispersion aqueuse de l'acide, ajout d'acide en fin de synthèse du polyamide, ou lors d'une quelconque étape d'un procédé de fabrication de poudre à partir dudit polyamide.

2. Utilisation selon la revendication 1, dans laquelle ledit au moins un acide comprend un mélange d'acide hypophosphoreux H₃PO₂ et d'acide phosphorique H₃PO₄, selon un ratio compris dans la gamme de 10/90 à 90/10.

3. Utilisation selon l'une quelconque des revendications 1 ou 2, **caractérisée en ce que** l'acide est ajouté lors d'un traitement à l'eau du polyamide dans lequel on met en contact le polyamide à l'état solide avec de l'eau ou de la vapeur d'eau contenant l'acide à une température proche de sa température de cristallisation Tc pendant une durée suffisante pour effectuer cette augmentation, puis on sépare l'eau (ou la vapeur d'eau) du polyamide et on sèche le polyamide.

4. Utilisation selon la revendication 3, dans laquelle il est procédé aux étapes suivantes :
- Mélanger le polyamide avec une solution d'eau ou de vapeur d'eau comprenant de 0,1 à 5% d'acide, le ratio en poids poudre/solution étant compris dans la gamme allant de 5 à 75% ;
- Soumettre le mélange à un palier de température comprise dans la gamme de Tc-20°C à Tc+10°C ;
- Séparer l'eau ou la vapeur d'eau du polyamide pour récupérer le polyamide sec.

5. Utilisation selon l'une quelconque des revendications 1 à 4, dans laquelle le polyamide est choisi parmi le PA11, le PA12, le PA10.10, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 % de motifs 11 soit plus de 90 % de motifs 12.

6. Utilisation selon l'une quelconque des revendications 1 à 5, dans laquelle le polyamide est sous forme de granulés ou de poudre.

7. Utilisation selon la revendication 6, dans laquelle le polyamide est sous forme de poudre de diamètre médian en volume D50 compris dans la gamme de 10 à 150 µm.

## Patentansprüche

1. Verwendung von wenigstens 4000 ppm wenigstens einer Säure zum Erhöhen der Recyclingfähigkeit eines Polyamids in einem Sinterungsverfahren, wobei die Säure aus hypophosphoriger Säure H₃PO₂, phosphoriger Säure H₃PO₃, Phosphorsäure H₃PO₄, Pyrophosphorsäure H₄P₂O₇, Metallphosphaten, Metallphosphiten, Metallhypophosphiten, Estern und Anhydriden der Phosphorsäure und der phosphorigen Säure und Mischungen davon ausgewählt wird; wobei die Säure durch wenigstens eine der folgenden Methoden in das Polyamid aufgenommen wird: Imprägnieren des Polyamids in einer wässrigen Dispersion der Säure, Zugeben der Säure am Ende der Synthese des Polyamids oder während eines beliebigen Schritts eines Verfahrens zur Herstellung eines Pulvers ausgehend von dem Polyamid.

2. Verwendung nach Anspruch 1, wobei die wenigstens eine Säure ein Gemisch aus hypophosphoriger Säure H₃PO₂ und Phosphorsäure H₃PO₄ in einem Verhältnis im Bereich von 10/90 bis 90/10 umfasst.

3. Verwendung nach einem der Ansprüche 1 oder 2, **dadurch gekennzeichnet, dass** die Säure während einer Behandlung des Polyamids mit Wasser zugegeben wird, wobei das Polyamid bei einer Temperatur nahe seiner Kristallisationstemperatur Tc während eines Zeitraums, der ausreichend ist, um diese Erhöhung zu bewerkstelligen, in festen Zustand mit Wasser oder Wasserdampf in Kontakt gebracht wird, das oder der die Säure enthält, und wobei anschließend das Wasser (oder der Wasserdampf) von dem Polyamid getrennt wird und das Polyamid getrocknet wird.

4. Verwendung nach Anspruch 3, wobei die folgenden Schritte durchgeführt werden:
- Mischen des Polyamids mit einer Wasserlösung oder mit Wasserdampf, die oder der 0,1 bis 5 % Säure enthält, wobei das Gewichtsverhältnis Pulver/Lösung im Bereich von 5 bis 75 % liegt;
- Anwenden einer Temperaturstufe im Bereich von Tc - 20°C bis Tc + 10°C auf das Gemisch;
- Abtrennen des Wassers oder des Wasserdampfs vom Polyamid, um das trockene Polyamid rückzugewinnen.

5. Verwendung nach einem der Ansprüche 1 bis 4, wobei das Polyamid ausgewählt wird aus PA11, PA12, PA10.10, aliphatischen Polyamiden, die aus der Kondensation eines aliphatischen Diamins mit 6 bis 12 Kohlenstoffatomen und einer aliphatischen Disäure mit 9 bis 12 Kohlenstoffatomen resultieren, und 11/12-Copolyamiden mit entweder mehr als 90 % 11-er Motiven oder mehr als 90 % 12-er Motiven.

6. Verwendung nach einem der Ansprüche 1 bis 5, wobei das Polyamid in Form eines Granulats oder eines Pulvers vorliegt.

7. Verwendung nach Anspruch 6, wobei das Polyamid in Form eines Pulvers mit einem volumenmedianen Durchmesser D50 im Bereich von 10 bis 150 µm vorliegt.

## Claims

1. Use of at least 4000 ppm of at least one acid for increasing the recyclability of a polyamide in a sintering process, said acid being selected from hypophosphorous acid H₃PO₂, phosphorous acid H₃PO₃, phosphoric acid H₃PO₄, pyrophosphoric acid H₄P₂O₇, metal phosphates, metal phosphites, metal hypophosphites, phosphoric and phosphorous esters and anhydrides, and mixtures thereof; wherein the acid is incorporated into the polyamide by at least one of the following methods: impregnation of the polyamide in an aqueous dispersion of the acid, addition of acid at the end of synthesis of the polyamide, or during any step of a process for manufacture of powder from said polyamide.

2. Use according to claim 1, wherein said at least one acid comprises a mixture of hypophosphorous acid H₃PO₂ and of phosphoric acid H₃PO₄, in a ratio in the range from 10/90 to 90/10.

3. Use according to either of claims 1 and 2, **characterized in that** the acid is added during treatment of the polyamide with water in which the polyamide in the solid state is brought into contact with water or steam containing the acid at a temperature near its crystallization temperature Tc for a sufficient time to effect this increase, then the water (or steam) is separated from the polyamide and the polyamide is dried.

4. Use according to claim 3, wherein the following steps are carried out:
- Mixing the polyamide with a solution of water or of steam comprising 0.1 to 5% of acid, the powder/solution weight ratio being in the range from 5 to 75%;
- Subjecting the mixture to a temperature plateau in the range from Tc-20°C to Tc+10°C;
- Separating the water or steam from the polyamide to recover the dry polyamide.

5. Use according to any one of claims 1 to 4, wherein the polyamide is selected from PA11, PA12, PA10.10, aliphatic polyamides resulting from the condensation of an aliphatic diamine having from 6 to 12 carbon atoms and an aliphatic diacid having from 9 to 12 carbon atoms and copolyamides 11/12 having either more than 90% of units 11 or more than 90% of units 12.

6. Use according to any one of claims 1 to 5, wherein the polyamide is in the form of granules or powder.

7. Use according to claim 6, wherein the polyamide is in the form of powder with volume-median diameter D50 in the range from 10 to 150 µm.
